# EUROPEAN PATENT APPLICATION

(11) **EP 3 674 459 A1**
(43) Date of publication of application: **01.07.2020**
(21) Application number: 19214631.4
(22) Date of filing: 10.12.2019
(51) Int. Cl.: D04B 15/94, H02K 1/06

(54) **A DISC TYPE MOTOR TRANSMISSION DEVICE FOR DRIVING A CIRCULAR KNITTING MACHINE**

(30) Priority: 20.12.2018 CN 201811577731
(71) Applicant: Beijing Ainy Ele-Mechanical Co., Ltd, Beijing 00000 (CN)
(72) Inventor: BAO ZHIPING, Liu Ge, Beijing, Beijing 00000 (CN)
(74) Representative: Isarpatent

(57) **Abstract**

The present invention relates to a disc type motor transmission device for driving a circular knitting machine, which comprises a fixed large disc (1) of the circular knitting machine, a rotating large disc gear (2) of the circular knitting machine and a syringe mounted on the rotating large disc gear of the circular knitting machine. The rotating large disc gear (2) of the circular knitting machine is rotatablely mounted on the fixed large disc (1) of the circular knitting machine, the fixed large disc (1) of the circular knitting machine and the rotating large disc gear (2) of the circular knitting machine are connected by an annular disc motor to form a dynamic coupling, making the rotating large disc gear (2) of the circular knitting machine to output the rotating power actively. The gear teeth of the rotating large disc gear of the circular knitting machine no longer have the driven function of withstanding the running torque. The disc type motor is mounted in a central hole of the fixed large disc of the circular knitting machine, and the disc type motor is an annular ironless axial magnetic field motor, and the disc type motor is connected to a controller. The disc type motor transmission device for driving the circular knitting machine of the invention has the advantages of simple structure, convenient installation and high efficiency.

## Description

### Technical field

The present invention relates to a disc type motor transmission device for driving a circular knitting machine.

### Background

The circular knitting machine is a commonly used textile machine, which includes fixed large disc of the circular knitting machine and rotating large disc gear of the circular knitting machine. The rotating large disc gear of the circular knitting machine can be rotatablely mounted on the fixed large disc of the circular knitting machine, and the fixed large disc of the circular knitting machine is used for supporting the rotating large disc gear of the circular knitting machine. The syringe is mounted on the rotating large disc gear of the circular knitting machine, and the rotation of the rotating large disc gear of the circular knitting machine drives the syringe to perform knitting. The rotating large disc gear of the circular knitting machine is driven by the motor through the belt transmission device and the gear transmission device, which is complicated in structure and installation, and there is mechanical loss in the whole process of transmitting torque.

### Summary of the Invention

The object of the invention is to provide a disc type motor transmission device which is simple in structure, convenient in installation and high in efficiency in driving a circular knitting machine.

To achieve the above object, the invention adopts the following technical solutions.

A disc type motor transmission device for driving a circular knitting machine, which comprises the fixed large disc of the circular knitting machine, rotating large disc gear of the circular knitting machine and a syringe mounted on the rotating large disc gear of the circular knitting machine. The rotating large disc gear of the circular knitting machine can be rotatablely mounted on the fixed large disc of the circular knitting machine, the fixed large disc of the circular knitting machine and the rotating large disc gear of the circular knitting machine are connected by the disc motor. The disc type motor is mounted in a central hole of the fixed large disc of the circular knitting machine, the disc type motor is an annular ironless axial magnetic field motor, and the disc type motor is connected to controller.

The disc type motor comprises stator mechanism and rotor mechanism: the stator mechanism is connected with the fixed large disc of the circular knitting machine into a whole, and the rotor mechanism is connected with the rotating large disc gear of the circular knitting machine into a whole. The work principle of the rotating large disc gear of the circular knitting machine is changed from the passive drive to the active drive.

The stator mechanism is composed of cylindrical stator bracket, annular stator coil, annular stator platen and stator mechanism locking bolt, and annular groove is arranged at the lower end of the through-hole of the fixed large disc of the circular knitting machine, and the lower end of the cylindrical stator bracket is provided with a turnup flange which matched with the annular groove of the fixed large disc of the circular knitting machine, and the turnup flange of the cylindrical stator bracket is connected with the fixed large disc of the circular knitting machine by bolts. An annular card slot is disposed at an upper opening of the stator bracket, the annular stator coil is engaged at the annular card slot of the cylindrical stator bracket, the annular stator platen is located above the annular stator coil. The cylindrical stator bracket, the annular stator coil and the annular stator platen are connected by the stator mechanism locking bolt into a whole.

The rotor mechanism is composed of annular rotor upper disc, annular rotor lower disc, upper magnetic steel group, lower magnetic steel group, annular rotor supporting ring, and rotor mechanism locking bolt; the annular rotor upper disc is fixedly connected with the bottom of the rotating large disc gear of the circular knitting machine by bolts, the upper magnetic steel group is installed below the annular rotor upper disc, the lower magnetic steel group is installed above the annular rotor lower disc, the annular stator coil is located between the upper magnetic steel group and the lower magnetic steel group, the annular rotor supporting ring is located between the annular rotor upper disc and the annular rotor lower disc. The annular rotor upper disc, the annular rotor lower disc and the annular rotor supporting ring are connected by the rotor mechanism locking bolt into a whole.

The annular groove and the annular boss matching with the rotating large disc gear of the circular knitting machine.

An encoder is mounted on the fixed large disc of the circular knitting machine, the encoder is with gear teeth, and the gear teeth of the encoder mesh with the gear teeth of the rotating large disc gear of the circular knitting machine.

The beneficial effects of the technical solution provided by the invention are as below.

One side, the present invention relates to a disc type motor transmission device for driving a circular knitting machine, which comprises fixed large disc of the circular knitting machine, rotating large disc gear of the circular knitting machine and syringe mounted on the rotating large disc gear of the circular knitting machine. The rotating large disc gear of the circular knitting machine can be rotatablely mounted on the fixed large disc of the circular knitting machine, the fixed large disc of the circular knitting machine and the rotating large disc gear of the circular knitting machine are connected by the annular disc motor to form a dynamic coupling, making the rotating large disc gear of the circular knitting machine output the rotating power actively. The rotating large disc gear of the circular knitting machine turns the driving mode from the original "passive drive" to the "active drive". The gear teeth of the rotating large disc gear of the circular knitting machine no longer has the driven function of withstanding the running torque. The disc type motor is mounted in the central hole of the fixed large disc of the circular knitting machine, and the disc type motor is an annular ironless axial magnetic field motor, and the disc type motor is connected to a controller. The controller inputs power current and signal to the stator mechanism, and the stator coil in the stator mechanism is an energizing conductor that generates tangential electromagnetic force under the action of the magnetic field to drive the rotor mechanism to rotate, thereby driving the rotating large disc gear of the circular knitting machine to rotate, the rotating large disc gear of the circular knitting machine drives the syringe to rotate to perform knitting in use. The disc type motor driving device of the large circular machine in the invention is directly driven by the disc motor, compared with the existing technology, this driving mode has the advantages of simple structure, convenient installation, saving the mechanical loss caused by mechanical transmission, high efficiency and accurate control of the rotation of the rotating large disc gear of the circular knitting machine.

On the other side, since the encoder is mounted on the fixed large disc of the knitting circular machine, the encoder is with gear teeth, and the gear teeth of the encoder is meshed with the gear teeth of the rotating large disc gear of the circular knitting machine by a certain gear ratio. The gear teeth of the rotating large disc gear of the circular knitting machine is used as the signal identification source of the encoder, and the encoder can provide the real-time rotational position and rotational speed signal of the rotating large disc gear of the circular knitting machine. The encoder provides the rotational position signal of the rotating large disc gear of the circular knitting machine with the controller, to form a closed loop control of the operation of the disc motor.

### Brief Description of the Drawings:

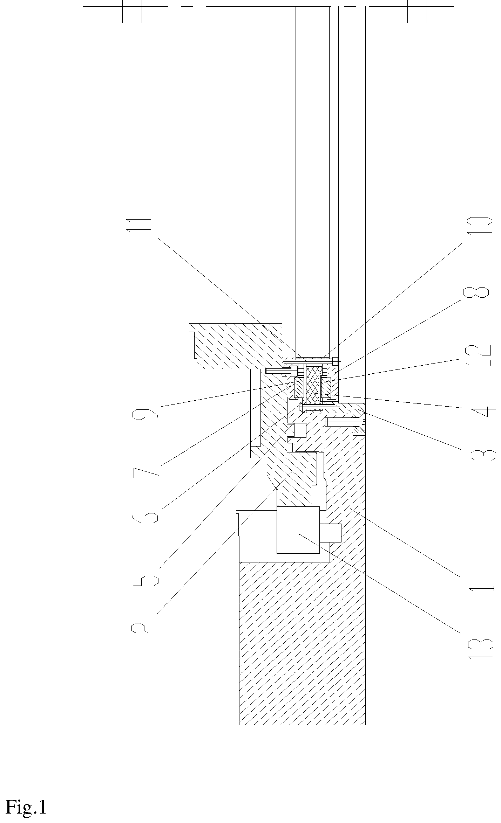

Fig. 1 is a schematic structural view of a preferred embodiment of the disc type motor transmission device for driving a circular knitting machine of the invention;
Description of drawing reference signs: 1- fixed large disc of the circular knitting machine; 2- rotating large disc gear of the circular knitting machine; 3-cylindrical stator bracket; 4- annular stator coil; 5- annular stator platen; 6- stator mechanism locking bolt; 7- annular rotor upper disc; 8- annular rotor lower disc; 9-upper magnetic steel group; 10- annular rotor supporting ring; 11- rotor mechanism locking bolt; 12- lower magnetic steel group; 13- encoder.

### Detailed Description of the Embodiments

In order to make the purpose, technical scheme and advantages of the invention clearer, the embodiments of the invention will be further described in detail through the drawings.

As shown in Fig.1, the disc type motor transmission device for driving the circular knitting machine of the invention, which comprises a fixed large disc of the circular knitting machine 1, a rotating large disc gear of the circular knitting machine 2, and a syringe mounted on a circular knitting machine rotating large disc gear. The rotating large disc gear of the circular knitting machine 2 can be rotatablely mounted on the fixed large disc of the circular knitting machine 1, and the knitting circular machine fixed large disc 1 and the circular knitting machine rotating large gear 2 are connected by the disc type motor, the disc motor installed in the central hole of the circular knitting machine fixed large disc 1, the disc type motor is mounted in the central hole of the fixed large disc of the circular knitting machine, the disc type motor is an annular ironless axial magnetic field motor, and the disc type motor is connected with a Huichuan brand MD310T1.5B type controller.

The disc type motor comprises stator mechanism and rotor mechanism: the stator mechanism is connected with the fixed large disc of the circular knitting machine 1 into a whole, and the rotor mechanism is connected with the rotating large disc gear of the circular knitting machine 2 into a whole.

The stator mechanism is composed of a cylindrical stator bracket 3, annular stator coil 4, annular stator platen 5 and stator mechanism locking bolt 6; the annular groove is arranged at the lower end of the through-hole of the fixed large disc of the circular knitting machine 1, and the lower end of the cylindrical stator bracket 3 is provided with a turnup flange which cooperates with the annular groove of the fixed large disc of the circular knitting machine, and the turnup flange of the cylindrical stator bracket 3 is connected with the fixed large disc of the circular knitting machine 1 by bolts. The annular card slot is disposed at an upper opening of the stator bracket 3, the annular stator coil 4 is engaged at the annular card slot of the cylindrical stator bracket 3, the annular stator platen 5 is located above the annular stator coil 4. The cylindrical stator bracket 3, the annular stator coil 4 and the annular stator platen 5 are connected by the stator mechanism locking bolt 6 into a whole.

The rotor mechanism is composed of annular rotor upper disc 7, annular rotor lower disc 8, upper magnetic steel group 9, lower magnetic steel group 12, annular rotor supporting ring 10, and rotor mechanism locking bolt 11; the annular rotor upper disc 7 is fixedly connected with the bottom of the rotating large disc gear of the circular knitting machine 2 by bolts, the upper magnetic steel group 9 is installed below the annular rotor upper disc 7, the lower magnetic steel group 12 is installed above the annular rotor lower disc 8, the annular stator coil 4 is located between the upper magnetic steel group 9 and the lower magnetic steel group 12, the annular rotor supporting ring 10 is located between the annular rotor upper disc 7 and the annular rotor lower disc 8. The annular rotor upper disc 7, the annular rotor lower disc 8 and the annular rotor supporting ring 10 are connected by the rotor mechanism locking bolt 11 into a whole.

The annular groove and the annular boss matching with the rotating large disc gear of the circular knitting machine 2are arranged at the connection of the annular rotor upper disc 7 and the rotating large disk gear of the circular knitting machine 2.

The encoder 13 is mounted on the fixed large disc of the circular knitting machine 1, the encoder 13 is with gear teeth, and the gear teeth of the encoder 13 mesh with the gear teeth of the rotating large disc gear of the circular knitting machine 2.

The above are only the preferred embodiments of the invention, and are not intended to limit the present invention. Any modifications, equivalents, improvements, etc., which are within the spirit and scope of the invention, should be included in the protection of the invention.

## Claims

1. A disc type motor transmission device for driving a circular knitting machine, which comprises a fixed large disc of the circular knitting machine, a rotating large disc gear of the circular knitting machine and a syringe mounted on the rotating large disc gear of the circular knitting machine, the rotating large disc gear of the circular knitting machine can be rotatablely mounted on the fixed large disc of the circular knitting machine, **characterized in that**, the fixed large disc of the circular knitting machine and the rotating large disc gear of the circular knitting machine are connected by the disc type motor, the disc type motor is mounted in the central hole of the fixed large disc of the circular knitting machine, and the disc type motor is an annular ironless axial magnetic field motor, and the disc type motor is connected to a controller at least.

2. The disc type motor transmission device for driving a circular knitting machine according to the claim 1, **characterized in that**, the disc type motor comprises stator mechanism and rotor mechanism, and the stator mechanism is connected with the fixed large disc of the circular knitting machine into a whole, and the rotor mechanism is connected with the rotating large disc gear of the circular knitting machine into a whole.

3. The disc type motor transmission device for driving a circular knitting machine according to the claim 2, **characterized in that**, the stator mechanism is composed of cylindrical stator bracket, annular stator coil, annular stator platen and stator mechanism locking bolt, and the annular groove is arranged at the lower end of the through-hole of the fixed large disc of the circular knitting machine, and the lower end of the cylindrical stator bracket is provided with a turnup flange matched with the annular groove of the fixed large disc of the circular knitting machine, and the turnup flange of the cylindrical stator bracket is connected with the fixed large disc of the circular knitting machine by bolts; the annular card slot is disposed at an upper opening of the stator bracket, the annular stator coil is clamped at the annular card slot of the cylindrical stator bracket, the annular stator platen is located above the annular stator coil, the cylindrical stator bracket, the annular stator coil and the annular stator platen are connected by the stator mechanism locking bolt into a whole.

4. The disc type motor transmission device for driving a circular knitting machine according to the claim 3, **characterized in that**, the rotor mechanism is composed of annular rotor upper disc, annular rotor lower disc, upper magnetic steel group, lower magnetic steel group, annular rotor supporting ring, and rotor mechanism locking bolt; the annular rotor upper disc is fixedly connected with the bottom of the rotating large disc gear of the circular knitting machine by bolts, the upper magnetic steel group is installed below the annular rotor upper disc, the lower magnetic steel group is installed above the annular rotor lower disc, the annular stator coil is located between the upper magnetic steel group and the lower magnetic steel group, the annular rotor supporting ring is located between the annular rotor upper disc and the annular rotor lower disc; the annular rotor upper disc, the annular rotor lower disc and the annular rotor supporting ring are connected by the rotor mechanism locking bolt into a whole.

5. The disc type motor transmission device for driving a circular knitting machine according to the claim 4, **characterized in that**, the annular groove and an annular boss matched with the rotating large disc gear of the circular knitting machine are arranged at the connection of the annular rotor upper disc and the rotating large disc gear of the circular knitting machine.

6. The disc type motor transmission device for driving a circular knitting machine according to the claim 3, **characterized in that**, an encoder is mounted on the fixed large disc of the circular knitting machine, the encoder is with gear teeth, and the gear teeth of the encoder mesh with the gear teeth of the rotating large disc gear of the circular knitting machine.
